# EUROPEAN PATENT APPLICATION

(11) **EP 4 303 716 A1**
(43) Date of publication of application: **10.01.2024**
(21) Application number: 22182989.8
(22) Date of filing: 05.07.2022
(51) Int. Cl.: G06F 3/16, G06F 40/18

(54) **METHOD FOR GENERATING DATA INPUT, DATA INPUT SYSTEM AND COMPUTER PROGRAM**

(71) Applicant: Continental Automotive Technologies GmbH, 30165 Hannover (DE)
(72) Inventor: Dr. Bär, Daniel, 90411 Nürnberg (DE)
(74) Representative: Continental Corporation

(57) **Abstract**

The invention relates to a method (1) for generating data input. According to the method (1) a data table (18) is displayed (2) to a user (15). Sensor readings of at least one user action pertaining to the displayed data table (18) are obtained (3; 10) and analyzed. Finally, data input is generated (6) based on the analyzed sensor readings. The invention further relates to a data input system (14) comprising a display (17), at least one sensor (19; 20) and a computing unit (16) and to a computer program.

## Description

### TECHNICAL FIELD

The invention relates to a method for generating data input, to a data input system and to a computer program that causes a data input system to carry out the method for generating data input when executed by a data input system.

### BACKGROUND

Data input, in particular input of structured data, is required in many different fields. As an example, requirements engineering is a discipline where humans need to review, edit and classify huge amounts of semi-structured textual data on an iterative basis. Reviewing and editing said data may have to be done, e.g., whenever new revisions of the requirements collections are made available or when product refinements are added to the specifications. This can be the case, e.g., when versions of requirements collections are handed back and forth between an automotive supplier and the car manufacturer.

Typically, requirements engineering is done with software systems that present sets of requirements in a tabular fashion, where each line corresponds to a single requirement. The requirement engineers are then going through this long list of rows and use input devices such as a mouse/trackpad and keyboards to review, edit and classify the data.

The above mentioned process, however, is tedious and consumes lots of effort and time of human subject-matter experts.

### SUMMARY

It is therefore an object of the present invention to provide an improved method for generating data input, a corresponding data input system and a corresponding computer program.

The object of the present invention is solved by the subject-matter of the independent claims, wherein further embodiments are incorporated in the dependent claims.

According to an aspect of the invention, a method for generating data input is provided. The method comprises displaying a data table to a user. In this context, data table may refer to a standard data table where data is arranged in rows and columns. However, data table may also refer to a more general concept where the data is arranged in a predetermined structured way. Displaying said data may be performed with a regular screen, with a projector or with alternative methods like smart glasses.

The method further comprises obtaining sensor readings of at least one user action pertaining to the displayed data table. These sensor readings are then analyzed and data input is generated based on the analyzed sensor readings. In particular, the analyzation of the sensor readings and the generation of the data input may be performed by a computing unit, wherein the computing unit may be a single computer, a parallel computer, a network of computers or the like.

By generating the data input based on the obtained sensor readings, efficiency of generating the data input is improved, the data input can be made easier and the data input is more convenient for the user.

According to an embodiment, the data table is a requirements engineering data table. In requirements engineering, large amounts of data have to be entered and/or modified, hence, improving the efficiency of generating the data input is very valuable for this task.

According to an embodiment, the at least one user action comprises a user's speech and the sensor readings comprise audio recordings of the user's speech. That is, the user's speech is captured, e.g., by a microphone. The data input is then generated based on the analyzed user's speech. In particular, natural language understanding may be performed on the user's speech. Based on the recognized user's intents, e.g., desired actions may be recognized and executed. As an example, a user intent may be to "insert in line 5, column D, text 'done'", which would then generate a data input of the text "done" in line 5, column D of the data table.

According to an embodiment, analyzing the sensor readings comprises natural language processing of the recorded user's speech. Here, also the context of the user's speech is analyzed to generate the data input. As an example, it may be determined that the context of the discussion is a particular line of the data table. If, e.g., in that line only one cell of the data table has to be filled in or updated, said cell may be highlighted and/or a cursor may be moved to said cell. The actual data input may then be performed based on the analysis of the recorded speech, but may also be performed based on keyboard input, where the user's action is typing and the sensor readings are key stroke recognitions.

According to an embodiment, the at least one user action comprises a user's eye movement and the sensor readings comprise images taken of the user's eye or eyes. That is, eye tracking is performed on the user or the users. Analyzing the sensor readings comprises identifying at least one location in the displayed data table towards which a user's view is directed. That is, the direction of the eye is matched to a location, in particular a cell, of the displayed data table. For this, the relation beween the user and the displayed data table may be needed. This may be, e.g., performed with an extra camera that is in a fixed relationship to the screen and hence captures relative position of the user to the screen, or by a calibration process that the user performs at the beginning of a session. A whole time sequence of a user's eye movement may be recorded, comprising the order of data table cells at which the user has looked and the duration of each view of the data table cells.

According to an embodiment, generating data input based on the analyzed sensor readings comprises identifying a topic from the recorded user's speech and editing data of the data table related to the identified topic. In particular, the identified topic may related to a certain line, column and/or cell of the data table. If, for example, the data content of one of the displayed cells is recognized, then it may be determined that cells related to said cell are to be edited. As an example, the cells in one line may be related to one another, and a particular column of the cells is to be edited. Then, when a particular cell is recognized in the recorded user's speech, the cell in the same line as the recognized cell and in the column to be edited is highlighted and/or the cursor is moved to said cell. Editing of said cell may then be performed, e.g., by keyboard input.

According to an embodiment, generating data input based on the analyzed sensor readings comprises identifying data of the data table to be edited and edits to be done to the data of the data table from the recorded user's speech. Similary to the previous example, the cell of the data table to be edited is identified. Moreover, also the edits to be done to the data are identified from the user's speech. Then, the identified data of the data table is edited according to the identified edits to be done. As an example, if the user's speech contains the phrase "This is done", the cell corresponding to the status of the task in a line of the data table will be set to "done".

According to an embodiment, generating data input based on the analyzed sensor readings comprises editing data of the data table corresponding to the location towards which the user's view is directed and/or editing data of the data table related to the location towards which the user's view is directed. Hence, either the cell at which a user is looking or a cell related to said cell is edited. In the latter case, a user may be looking at a cell containing a heading corresponding to the entire line containing said cell and there may be only one cell in said line which is to be edited or it is determined from the context which cell in said line is to be edited. The cell to be edited is then highlighted and/or the cursor is moved to said cell. The editing may be performed by recognition of the user's speech and/or by direct user input, e.g., via a keyboard.

According to an embodiment, generating data input based on the analyzed sensor readings comprises generating training data, training an artificial intelligence with the generated training data and using the trained artificial intelligence to produce data input for a new data table. The training data comprises the analyzed sensor readings and data entered in the data table. Said training data may, in particular, comprise analyzed sensor readings and data entered in the data table for a plurality of data tables. The new data table, for which the data input is produced by the trained artificial intelligence, may then be a new data table in which certain cells have to be filled in but may also be an existing data table that needs to be edited. Hence, the new data table is filled in automatically, saving a lot of time and human effort.

According to an embodiment, the artificial intelligence is a deep learning model. In particular, the artificial intelligence may be based on a transformer architecture (see, A. Vaswani et al., "Attention is all you need" in Advances in Neural Information Processing Systems, Curran Associates, Inc., 2017), which is, e.g., particularly well suited to natural language processing.

According to an embodiment, analyzing the sensor readings comprises identifying the locations in the displayed data table towards which a user's view is directed, the durations that a user's view is directed at the locations in the displayed data table and/or the order in which a user's view shifts between the locations in the displayed data table. In particular, all of said data is comprised in a sequence comprising the locations in the data table at which the user's view is directed along with the respective durations. Out of this information, the artificial intelligence extracts information about which cells of the data table are considered by a user before generating a data input. This information is then used to consult said cells in order to generate the data input for cells in the new data table.

According to an embodiment, analyzing the sensor readings comprises identifying durations that a topic is discussed, shifts of topics, durations of breaks and/or usage of filler words. Hence, the discussion leading to a data input is analyzed. Breaks may indicate that the users are thinking a lot before an input is made, and the use of filler words like "erm" and "umm" may indicate an insecurity of the users, all of which will enter weights in the artificial intelligence.

According to an embodiment, analyzing the sensor readings further comprises analyzing the users and/or the user's roles. For example, specific patterns related to specific users may be recognized. Also, the analysis, and therefore the weights given in the artificial intelligence, may depend on the user's roles, such as a team leader, a responsible engineer and/or an associated engineer. In particular, the sensor readings corresponding to each of the users may be weighted differently based on the user's roles.

According to another aspect of the invention, a data input system is provided. The data input system comprises a display, at least one sensor and a computing unit. The display is adapted to display a data table and may be a regular screen, a projector with a corresponding screen and/or smart glasses. The at least one sensor is adapted to obtain sensor readings of at least one user action. Said sensor may be a microphone being adapted to record a user's speech or a camera adapted to determine a user's eye movements. The computing may be a single computer, a parallel computer, a network of computers or the like and is adapted to analyze the sensor readings and generate data input based on the analyzed sensor readings. In particular, the data input system may be adapted to perform the method according to the above description. Advantages of said data input system and further embodiments may be found corresponding to the above description.

According to yet another aspect of the invention, a computer program is provided. The computer program comprises instructions which, when the program is executed by a data input system according to the above description, case the data input system to carry out the method according to the above description. Advantages of said data input system and further embodiments may be found corresponding to the above description.

### BRIEF DESCRIPTION OF THE DRAWINGS

These and other aspects of the invention will be apparent from and elucidated further with reference to the embodiments described by way of examples in the following description and with reference to the accompanying drawings, in which
- Fig. 1: shows a flowchart of an embodiment of a method for generating data input;
- Fig. 2: shows a flowchart of another embodiment of a method for generating data input;
- Fig. 3: shows a flowchart of yet another embodiment of a method for generating data input;
- Fig. 4: shows a flowchart of yet another embodiment of a method for generating data input;
- Fig. 5: shows a flowchart of yet another embodiment of a method for generating data input; and
- Fig. 6: shows a schematic view of a data input system.

In the figures, elements which correspond to elements already described may have the same reference numerals. Examples, embodiments or optional features, whether indicated as non-limiting or not, are not to be understood as limiting the invention as claimed.

### DESCRIPTION OF EMBODIMENTS

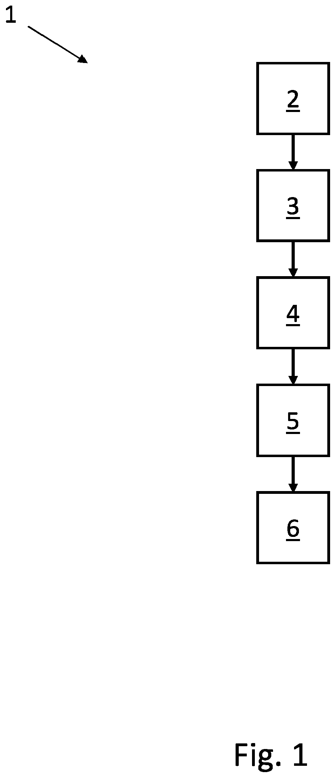

Figure 1 shows a flowchart of an embodiment of a method 1 for generating data input. According to the method, a data table is displayed 2 to a user. This may be performed with a standard screen, via a projector or with smart glasses. Also, audio recordings of a user's speech are obtained 3, e.g., with a microphone. Then, natural language processing is applied 4 to said recorded user's speech. Out of the user's speech, user intents are extracted 5 and with said user intents, data input is generated 6.

As an example, the data table may be a requirements engineering data table. Here, e.g., a label "hardware" may be suggested for a requirement under study. Requirement engineers can then accept said suggested label, e.g., by saying "accept" or by saying "That's okay, move on." Alternatively, they can reject it by saying "reject" or change it, e.g., by saying "This is a software requirement."

Also, the method may comprise a step of providing help to the users, e.g., when a question is recognized using natural language processing. In the above example of requirement engineering, a question "What's the section title again?" or "What's the ASIL rating of this requirement?" may lead to an output of the respective answer, e.g., via a speaker or via a message on the display.

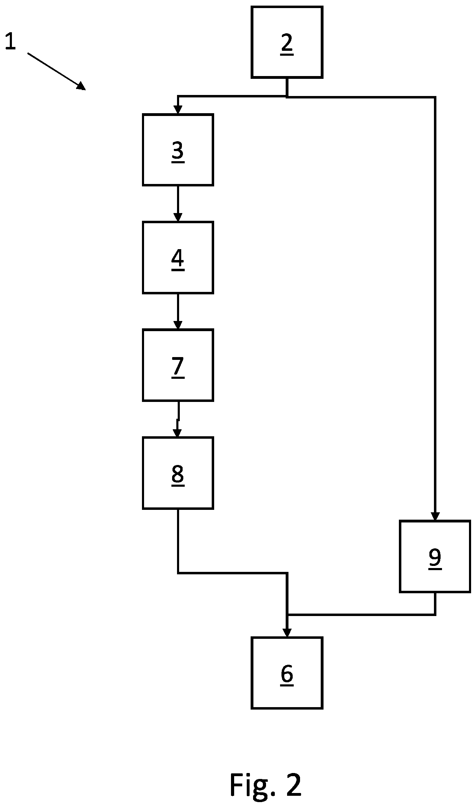

Figure 2 shows a flowchart of another embodiment of a method 1 for generating data input. According to this method, using natural language processing, topics are extracted 7 and based on said extracted topics, a cell to be edited is selected 8, i.e., highlighted and/or a cursor is moved to said cell. Then, a further user input, e.g., via a keyboard, is obtained 9, and the data input is generated 6 for the selected cell based on the keyboard input.

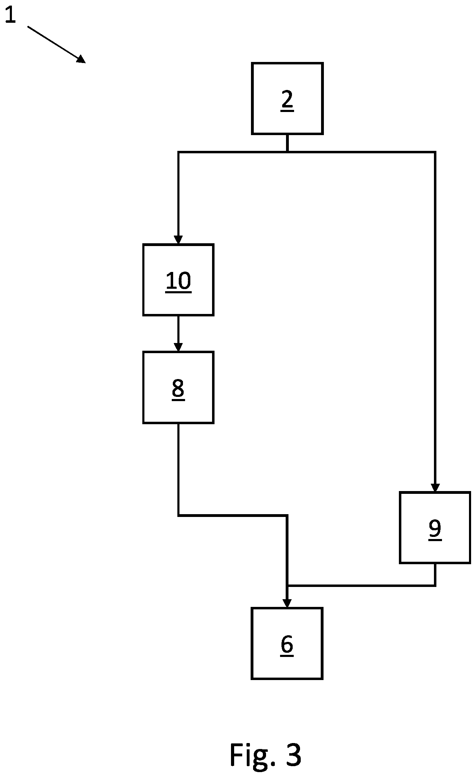

Figure 3 shows a flowchart of yet another embodiment of a method 1 for generating data input. According to this method, a user's eye movement is obtained 10, i.e., eye tracking for the user is provided. Based on the location at which the user's view is directed, a cell of the data table is selected 8. If the cell at which the user's view is directed is an editable cell, said cell may be directly selected. If, on the other hand, the cell at which the user's view is directed is not editable, e.g., a heading, then a cell corresponding to said cell, e.g., a cell in the same line, that is editable, may be selected. Again, keyboard input is obtained 9 and with that data input is generated 6 at the selected cell.

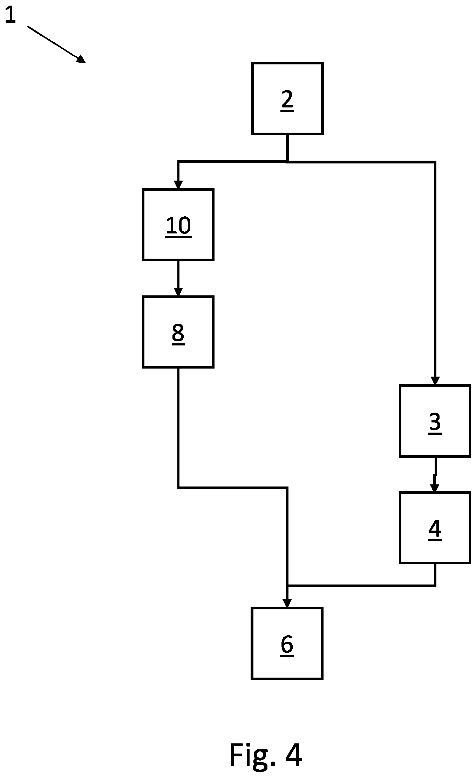

Figure 4 shows a flowchart of yet another embodiment of a method 1 for generating data input. Compared to the method 1 of Figure 3, instead of obtaining keyboard input, a user's speech is obtained 3, natural language processing is applied 4 to the obtained user's speech, and with said processed user's speech, the data input is generated 6 at the cell that has been identified by obtaining 10 the user's eye movement.

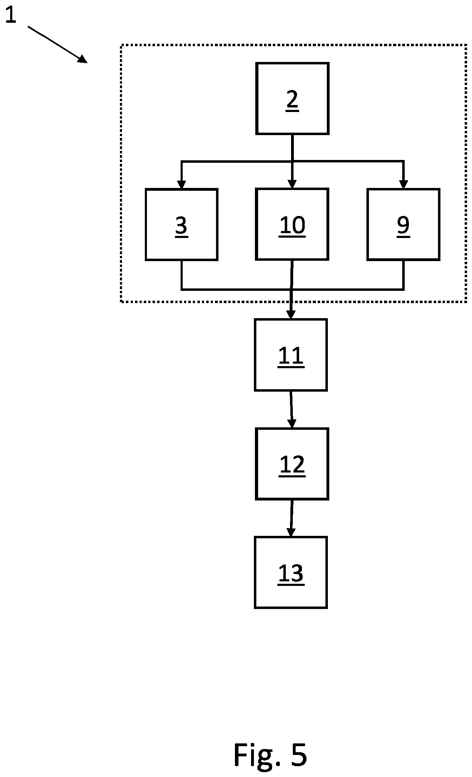

Figure 5 shows a flowchart of yet another embodiment of a method 1 for generating data input. According to this method, a data table is displayed 2 to a user, a user's speech is obtained 3, a user's eye movement is obtained 10 and keyboard input is obtained 9 to generate data input 6. Further, the data table and the generated data input are saved along with the obtained user's speech and the obtained user's eye movement to generate 11 training data. This is repeated for a plurality of data tables. The training data is then used to train 12 an artificial intelligence such as an artificial intelligence based on a transformer architecture. The trained artificial intelligence is then used to produce 13 data input for a new data table. Said new data table may be a new data table in which certain cells have to be filled in but may also be an existing data table that needs to be edited. By producing data input for said new data table, human time and effort is saved.

In the method 1 of Figure 5, only one of obtaining 3 a user's speech or obtaining 10 a user's eye movement may be actually realized. If data input is generated 6 without using a keyboard input, e.g., entirely by analyzing the user's speech, obtaining 9 keyboard input may also be omitted. As another example, the user's eye movement may be obtained 10 only to generate 11 the training data and not to generate 6 the data input.

The artificial intelligence "learns" what leads to certain input, e.g., via the analyzed user's speech which may comprise discussions of particular topics before a data input is generated 6 or a user's eye movement to certain cells of the data table before a data input is generated 6.

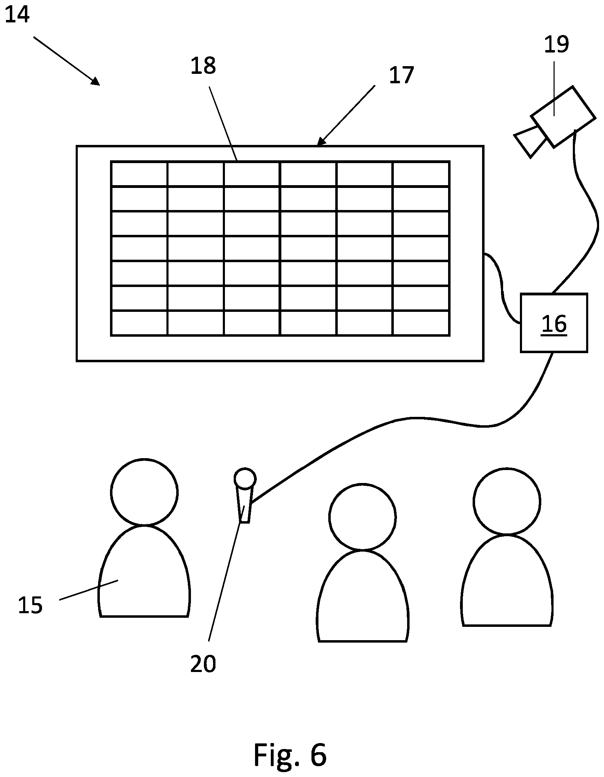

Figure 6 shows a data input system 14 and a plurality of users 15. The data input system 14 comprises a computing unit 16 that is connected to a display 17 that displays a data table 18. The computing unit 16 is further connected to an eye tracking sensor 19, which is here shown as a camera that captures the users' eye movements. Also, the computing unit 16 is connected to a microphone 20 that is adapted to record users' speeches. The data input system 14 is adapted to perform the methods according to any of the above descriptions. Hence, human time and effort may be saved with said data input system 14.

In particular, in saving time in a requirements engineering process, new requirements, in particular new safety requirements, may be processed faster, which then results in a faster implementation of new features, in particular safety features.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: method for generating data input
- 2: displaying a data table
- 3: obtaining a user's speech
- 4: applying natural language processing
- 5: extracting user intents
- 6: generating data input
- 7: extracting topics
- 8: selecting a cell
- 9: obtaining keyboard input
- 10: obtaining a user's eye movement
- 11: generating training data
- 12: training an artificial intelligence
- 13: producing data input
- 14: data input system
- 15: user
- 16: computing unit
- 17: display
- 18: data table
- 19: eye tracking sensor
- 20: microphone

## Claims

1. Method (1) for generating data input, comprising:
displaying (2) a data table (18) to a user (15);
obtaining (3; 10) sensor readings of at least one user action pertaining to the displayed data table (18);
analyzing the sensor readings; and
generating (6) data input based on the analyzed sensor readings.

2. Method (1) according to claim 1, wherein the data table (18) is a requirements engineering data table.

3. Method (1) according to claim 1 or 2, wherein the at least one user action comprises a user's speech and the sensor readings comprise audio recordings (3) of the user's speech.

4. Method (1) according to claim 3, wherein analyzing the sensor readings comprises natural language processing (4) of the recorded user's speech.

5. Method (1) according to any of claims 1 to 4, wherein
the at least one user action comprises a user's eye movement,
the sensor readings comprise images taken of the user's eye or eyes, and
analyzing the sensor readings comprises identifying at least one location in the displayed data table towards which a user's view is directed.

6. Method (1) according to any of claims 3 to 5, wherein generating (6) data input based on the analyzed sensor readings comprises
identifying a topic (7) from the recorded user's speech and
editing data of the data table related to the identified topic.

7. Method (1) according to any of claims 3 to 6, wherein generating (6) data input based on the analyzed sensor readings comprises
identifying data of the data table to be edited and edits to be done to the data of the data table from the recorded user's speech and
editing the identified data of the data table according to the identified edits to done.

8. Method (1) according to any of claims 5 to 7, wherein generating (6) data input based on the analyzed sensor readings comprises
editing data of the data table corresponding to the location towards which the user's view is directed and/or
editing data of the data table related to the location towards which the user's view is directed.

9. Method (1) according to any of claims 1 to 5, wherein generating (6) data input based on the analyzed sensor readings comprises
generating training data (11) comprising the analyzed sensor readings and data entered in the data table (18);
training (12) an artificial intelligence with the generated training data (11);
using the trained artificial intelligence to produce (13) data input for a new data table (18).

10. Method (1) according to claim 9, wherein the artificial intelligence is a deep learning model, in particular based on a transformer architecture.

11. Method (1) according to claim 9 or 10, wherein analyzing the sensor readings comprises identifying the locations in the displayed data table (18) towards which a user's view is directed, the durations that a user's view is directed at the locations in the displayed data table and/or the order in which a user's view shifts between the locations in the displayed data table.

12. Method (1) according to any of claims 9 to 11, wherein analyzing the sensor readings comprises identifying durations that a topic is discussed, shifts of topics, durations of breaks and/or usage of filler words.

13. Method (1) according to any of claims 9 to 12, wherein analyzing the sensor readings further comprises analyzing the users and/or the users' roles.

14. Data input system (14), comprising
a display (17) adapted to display a data table (18);
at least one sensor (19; 20) adapted to obtain sensor readings of at least one user action; and
a computing unit (16) adapted to analyze the sensor readings and generated data input based on the analyzed sensor readings.

15. Computer program comprising instructions which, when the program is executed by a data input system (14) according to claim 14, cause the data input system (14) to carry out the method (1) according to any of claims 1 to 13.
